# EUROPEAN PATENT SPECIFICATION

(11) **EP 3 121 200 B1**
(45) Date of publication and mention of the grant of the patent: **16.01.2019**
(21) Application number: 15002168.1
(22) Date of filing: 22.07.2015
(51) Int. Cl.: C08F 2/24, C08K 5/053, C08K 5/06, C08F 218/08, C08L 31/04

(54) **REDISPERSIBLE POLYMER POWDER COMPOSITIONS WITH IMPROVED IMPACT RESISTANCE**
ERNEUT DISPERGIERBARE POLYMERPULVERZUSAMMENSETZUNGEN MIT VERBESSERTER SCHLAGFESTIGKEIT
COMPOSITIONS DE POUDRES POLYMÈRES REDISPERSIBLES PRÉSENTANT UNE RÉSISTANCE AUX CHOCS AMÉLIORÉE

(43) Date of publication of application: 25.01.2017
(73) Proprietor: Organik Kimya Sanayi Ve Tic. A.S., ISTANBUL (TR)
(72) Inventor: Ergun Ersen, Nur Basak, 34075 Kemerburgaz/Eyup Istanbul (TR); Perez Lorenzo, Guillermo, 34075 Kemerburgaz/Eyup Istanbul (TR); Altinok, Sibel, 34075 Kemerburgaz/Eyup Istanbul (TR)
(74) Representative: Müller-Boré & Partner Patentanwälte PartG mbB

(56) References cited:
- JP-A- H09 249 442
- US-A- 4 542 182

## Description

The present invention relates to a process for producing a vinyl ester latex polymer composition, a vinyl ester latex polymer composition obtainable by said process, a water redispersible polymer powder with improved impact resistance obtained therefrom and to the use of the polymer powder for construction applications.

Water redispersible polymer powders are commonly used as additives in building material applications to improve their performance regarding tensile adhesion strength, impact resistance, abrasion resistance, flexural strength, compressive strength, self-levelling property, hydrophobicity, water resistance, crack bridging and the like. These redispersible polymer powders are prepared by spray drying the appropriate polymer dispersion with hot air steam. Generally, redispersible polymer powders are dry blended with cement and other component mixtures, followed by mixing with water. During wet mixing, the redispersible polymer powders are redispersed. After redispersion, these redispersed particles fill the pores between the cement crystals and make polymer bridges between these crystals, resulting in enhanced binder properties of cement.

The redispersible polymer powders are used in different types of tile adhesive applications such as C1, C2, S1, S2, C2TES1 and the like; tile grout applications; repair mortar applications; adhesives applications for EPS and XPS boards in ETICS (External Thermal Insulation Composite Systems); self-levelling mortar applications and the like.

The reduction of energy consumption by means of an increase in insulation efficiency is of paramount importance for the building sector. Exterior Thermal Insulation Composite Systems (ETICS) play an effective role to enhance the energy efficiency of buildings. In this technical field, redispersible polymer powders can impart impact resistance and tensile bonding strength on EPS (expanded polystyrene) / XPS (extruded polystyrene) surfaces which are particularly used as insulation materials in ETICS.

US 4,542,182 and JP H09 249442 A describe vinyl ester latex polymer compositions.

The object underlying the present invention is to provide new materials, i.e. redispersible polymer powders, particularly for ETICS and similar applications. Such redispersible polymer powders should provide both high impact resistance and high bonding strength on EPS, of high interest in ETICS and similar applications.

This object and others which will become apparent from the following disclosure, are achieved by the present invention which relates to a process for producing a vinyl ester latex polymer composition, where di- and/or tri-hydroxy alcohols are used during the polymerization of the vinyl ester based emulsion polymers, a vinyl ester latex polymer composition obtainable by said process. The thus produced compositions are further spray dried with hot air steam to form redispersible polymer powders, showing improved impact resistance in ETICS applications. These redispersible polymer powders can suitably used as additives to improve impact strength of the mortar in ETICS and related applications.

In particular, the present invention relates to a process for producing a vinyl ester latex polymer composition,
providing a vinyl ester latex polymer composition, comprising, based on the total amount of monomers,
a) from 50 to 99% by weight of vinyl esters of C2-C12-carboxylic acids and from 1% to 50% of acrylic esters, methacrylic esters, maleic esters, ethylene or any other monomer capable of copolymerizing with the said vinyl esters by radical emulsion polymerization, and
b) from 0.5% to 10% by weight, preferably from 1% to 5% by weight, based on total amount of monomers, of di- and/or tri-hydroxy alcohols of MW (molecular weight) lower than 500 g/mol, and
carrying out emulsion polymerization of this composition in a temperature range from 0 to 100° C and initiated by means of water-soluble free-radical initiators used for emulsion polymerization.

The present invention further relates to a vinyl ester latex polymer composition obtainable by said process.

A further embodiment of the present invention relates to water redispersible polymer powders obtained by spray drying an aqueous emulsion of said vinyl ester latex polymer composition.

Redispersible polymer powders, as a general rule, impart superior properties such as high bonding strength to the joined surfaces e.g. both concrete and EPS in ETICS, and to tiles and floorings/walls in cementitious tile adhesive applications. Normally, high impact resistance conflicts with high bonding strength. Generally, the use of redispersible powder cement modifiers of low Tg confer low bonding strength to the mortars when applied onto EPS. In other words, the cementitious layer can be delaminated from the EPS substrate. However, and this is a major surprising finding gained by the present invention, mortars that are prepared with vinyl ester, particularly vinyl acetate based redispersible polymer powders of the present invention provide both high impact resistance and high bonding strength on EPS, of high interest in ETICS and similar applications.

According to literature and practical experience, if the polymer has low Tg (meaning is softer, more elastic, has low glass transition temperature), the impact resistance of the polymer is improved in ETICS applications. In the present invention, it has been surprisingly found that the redispersible polymer powders with comparatively higher Tg according to the present invention, exhibit better impact resistance than the conventional lower Tg (softer) ones.

Commonly, redispersible polymer powders are produced by radical emulsion polymerization in both atmospheric reactors and pressurized reactors (when ethylene is used as co-monomer for vinyl acetate). In general, to produce low Tg polymers (soft), monomers that induce that property have to be used in amounts well above 10% based on the total monomer amount in vinyl acetate (VAM) compositions. Butyl acrylate (BA) and 2-ethyl hexyl acrylate (2EHA) are the most common monomers used to induce softness and low Tg when atmospheric reactors are used, whereas ethylene is the most common one when the polymerization is carried out in a pressurized reactor.

When atmospheric reactors are used, relatively high amounts (above 10%) of BA and/or 2EHA are copolymerized with VAM to obtain soft (more flexible) polymers with the purpose of imparting impact resistance in applications like ETICS. Due to the unfavourable co-polymerization factors (or reaction rate constants) of VAM and the aforementioned acrylates, the use of high levels of those monomers is undesired because their reaction is partially hindered, copolymer structures are not homogeneous, tend to result into high viscosity products, yielding unacceptable free monomer levels and coagulum amount, etc. Due to all that, the production and also the spray drying operation of such copolymers is more difficult and less productive.

According to the present invention, it has been found that by using a low molecular (<500) weight di-hydroxyl or tri-hydroxyl alcohol during the polymerization of the vinyl ester based latex polymer, a dramatic increase in impact resistance of the cementitious layer on EPS surfaces for ETICS applications can be obtained, while maintaining an optimum bonding strength. Redispersible polymer powders made according to the present invention also show a significant increase in the adhesion properties such as tensile adhesion strength after water immersion and tensile adhesion strength after heat ageing for tile adhesive applications.

In many patents and publications polyethylene glycols (di-hydroxyl polyethers) of high MW have been described as useful protective colloids in many compositions, and low MW weight glycols like mono-ethylene glycol have been reported as post-additives to improve freeze resistance or retard drying. However, tri-hydroxyl alcohols (and particularly glycerol) have never been mentioned in connection with the application fields the present invention is concerned with. A few examples of those:
US 4,542,182 relates to lattices of vinyl acetate/olefin copolymers. The said lattices contain a protective colloid comprising a water-soluble polymer (a) containing at least one monomer selected from the group consisting N-methylolacrylamide and N-methylolmethacrylamide and a water-soluble polymer (b) of ethylene glycol, wherein polymer (b) has a molecular weight of between 1,000 and 50,000. The lattices are prepared by polymerization in aqueous emulsion, in the presence of an initiator and the protective colloid. In this patent polyethylene glycol was used as a protective colloid.

US 4,797,964 discloses vinyl acetate based copolymers with di-butyl maleate containing protective colloids as "polyethylene glycol" for textile finishing applications. In this patent, polyethylene glycol having an average molecular weight of from 3,000 to 50,000 was used again as a protective colloid.

In RU 2006120894 (A), it has been found that using a complex reagent that contains 88.9-90.1% polyvinyl acetate dispersion, 0.9-2.22% nitrilotrimethylphosphonic acid, 4.44-4.50% dibutyl phthalate and 4.44-4.50% of "ethylene glycol" in mortar application formulation, improves adhesion and strength properties of grouting mortar. In this patent, "ethylene glycol" was added to the final formulation of the grouting mortar.

JP-H09249442 (A) is related to a premix mortar which is obtained by blending a powder comprising 40.00-80.00 wt% Portland cement, 20.00-60.00 wt% silica sand and 0.50-5.00 inorganic fiber with an admixture comprising 50.00-80.00 wt% ethylene-vinyl acetate copolymer, 20.00-50.00 wt% water, 0.10-1.00w t% methyl cellulose-based thickener,0.10-1.50 wt% polyvinyl alcohol based thickener and 1.00-10.00 wt% mono-ethylene glycol in order to provide (2.5:1) to (4:1) ratio. In this patent "mono-ethylene glycol" is added to the final formulated compound as an antifreezing agent.

US 2003/0164478A1 discloses a water-redispersible powder composition based on water-insoluble polymers, and comprising, based on the total weight of the polymer, from 0.1 to 30% by weight of at least one carboxylic ester whose alcohol component is derived from the group consisting of the poly-hydroxy compounds, and to a process for preparing the composition, and also to the use of the composition, in particular for reducing the water absorption of construction compositions. Therefore, the disclosure here is about the use of esters of polyhydroxy components, not about the poly-hydroxy compounds as such. No reference is made to the properties targeted by the present invention, notably impact resistance and adhesion on EPS.

In a preferred embodiment of the present invention, the di-hydroxy alcohols are alkylene glycols like mono-ethylene glycol (MEG), di-ethylene glycol (DEG), triethylene glycol (TEG), propylene glycol (PG), di-propylene glycol (DPG) and other glycols and diols of MW below 500 g/mol.

Preferred tri-hydroxy alcohols are sugar alcohols and, particularly glycerol (also known as glycerine). These products, and particularly the latter, are common additives in food and beverages, totally harmless for humans and the environment.

In a more preferred embodiment of the present invention, the hydroxy component is glycerol. In another more preferred embodiment of the present invention, the hydroxy component is a glycol of MW less than 250 g/mol.

In a further preferred embodiment of the present invention, vinyl esters of C2-C12-carboxylic acids are vinyl acetate, vinyl propionate, vinyl butyrate, vinyl laurate, vinyl 2-ethylhexanoate, 1-methylvinyl acetate and vinyl pivalate; particular preference is given to vinyl acetate and vinyl esters of α-branched monocarboxylic acids commercially available under trade names VeoVa™ EH, VeoVa™9 or VeoVa™ Neo 10, etc.

Preferred acrylic or methacrylic esters are methyl acrylate, methyl methacrylate, ethyl acrylate, ethyl methacrylate, propyl acrylate, propyl methacrylate, n-butyl acrylate, tert.-butyl acrylate, n-butyl methacrylate, tert.-butyl methacrylate and 2-ethylhexyl acrylate. Particular preference is given to butyl acrylate and 2-ethyl hexyl acrylate.

Preferred maleic esters are di-butyl maleate and di-octyl maleate.

Suitable auxiliary monomers are, for example but not being exhaustive, α,β-monoethylenically unsaturated monocarboxylic and dicarboxylic acids and their amides or nitriles, e.g. acrylic acid, methacrylic acid, maleic acid, fumaric acid, itaconic acid, acrylamide or methacrylamide; ethylenically unsaturated sulfonic acids or their salts, preferably vinylsulfonic acid, 2-acrylamidopropanesulfonate and/or N-vinylpyrrolidone.

If desired, said polymers further comprise from 0.01 to 5% by weight, in each case based on the total weight of the polymer, of one or more auxiliary monomer units for crosslinking or to modify the adhesion properties.

Monomer units having a crosslinking action are preferably present in the polymer in an amount of from 0.01 to 5.0% by weight, more preferably 0.5 to 5.0% by weight, based on the total weight of the polymer. Examples are N-methylolacrylamide, N-methylolmethacrylamide; N-(alkoxymethyl)acrylamides or N-(alkoxymethyl)methacrylamides containing a C₁-C₆-alkyl radical, e.g. N-(isobutoxymethyl)acrylamide (IBMA), N-(isobutoxymethyl)methacrylamide (IBMMA), N-(n-butoxymethyl)acrylamide (NBMA), N-(n-butoxymethyl)methacrylamide (NBMMA); multiple ethylenically unsaturated comonomers such as ethylene glycol diacrylate, 1,3-butylene glycol diacrylate, 1,4-butylene glycol diacrylate, propylene glycol diacrylate, divinyl adipate, divinyl benzene, vinyl methacrylate, vinyl acrylate, allyl methacrylate, allyl acrylate, diallyl maleate, diallyl phthalate, diallyl fumarate, methylenebisacrylamide, cyclopentadienyl acrylate or triallyl cyanurate.

Comonomer units suitable for modifying the adhesion properties are, for example, hydroxylalkyl methacrylates and hydroxylalkyl acrylates such as hydroxyethyl, hydroxypropyl or hydroxybutyl acrylate or methacrylate and also compounds such as diacetone-acrylamide and acetylacetoxyethyl acrylate or methacrylate.

The polymerization reaction of the vinyl ester based emulsion polymer reaction is preferably carried out in a temperature range from 0 to 100° C and is initiated by means of water-soluble free-radical initiators used for emulsion polymerization. These are the known organic and inorganic peroxides such as alkali metal peroxo-disulfates, hydrogen peroxide, tert.-butyl hydroperoxide or organic azo compounds. These known compounds are preferably used in combination with reducing agents such as the sodium salt of hydroxymethanesulfinic acid, ascorbic acid, sodium sulfite, sodium bisulfite, sodium sulfoxylate derivatives. In addition, it is possible to use metal compounds in which the metal can be present in various oxidation states, e.g. iron(II) sulfate.

As dispersants, it is possible to use all kind of emulsifiers employed in emulsion polymerization. To stabilize the dispersion, it is possible to use either protective colloids or emulsifiers or combinations of both two. Suitable protective colloids are, polyvinyl alcohols, polyethylene glycol, polyvinylpyrrolidone, celluloses such as hydroxyethylcellulose, hydroxypropylcellulose and carboxymethylcellulose, starches and dextrins, cyclodextrins, homopolymers or copolymers of acrylamidopropanesulfonic acid. The protective colloids are preferably used in an amount of from 2 to 40%, more preferably 3 to 15 % and most preferably 5 to 10% by weight based on the total weight of the monomers.

Suitable emulsifiers can be all commercial ionic and nonionic emulsifiers. Particularly preferred examples are: ethoxylated fatty alcohols and also alkali metal and ammonium salts of long-chain alkyl sulfates (C₈-C₁₂-alkyl radical), of sulfuric monoesters of ethoxylated alkanols and ethoxylated alkylphenols, of alkylsulfonic acids and of alkylarylsulfonic acids.

The polymerization is carried out at a pH of preferably from 2 to 7. Before drying, the dispersion is preferably adjusted to solids content of from 10 to 65%, more preferably from 20 to 55% and most preferably from 40 to 50%.

The resultant liquid polymer dispersion can have glass transition temperatures (Tg) ranging from (minus) -40°C to +50°C, more preferably between (minus) -10°C to +35°C .

For the preparation of the polymer powders redispersible in water, the aqueous dispersions are dried, for example by means of fluidized-bed drying, freeze-drying or spray-drying, preferably spray-drying. In general, the spray-drying is carried out in conventional spray-drying plants by hot air steam known from the prior art. It is possible to effect the atomization by means of airless nozzles, binary nozzles or multiple nozzles or with a rotating disk. The inlet temperature of the spray dryer is usually from 80 to 150°C, preferably from 120 to 145°C. The outlet temperature of the spray dryer is usually from 40 to 100°C, preferably from 50 to 80°C.

To avoid caking of the redispersible polymer powder, anticaking agents such as finely divided silica, kaolin, calcium carbonate, magnesium carbonate, talc, aluminium silicates, combinations of dolomite or other mineral auxiliaries can be used in a known manner.

The redispersible polymer powders according to the present invention may be used in typical construction application fields, such as C1, C2, S1, S2, C2TES1 type tile adhesives and the like, tile grouts applications, repair mortar applications, adhesives applications especially for EPS and XPS boards in ETICS applications and the like.

The invention is described in more detail, but not limited to the following examples. The parts and percentages stated in the examples are based on weight unless otherwise stated.

### EXAMPLE 1

### Preparation of vinyl acetate/2-ethylhexyl acrylate based emulsion polymer with mono ethylene glycol

A monomix-1 (monomer blend) consisting of 501.96 parts of vinyl acetate and 16.02 parts of 2-ethylhexyl acrylate was prepared. 40 parts of this monomix was set aside (seed monomix) and the rest was placed in a dosing funnel attached to one of the reactor's necks.

134 parts of deionized water and 191 parts of polyvinyl alcohol 13/88 (14% solution in DI water) are added to a 3-necked flask equipped with a stirrer, thermometer and a reflux condenser. The flask is heated to 65°C and the seed monomix is added. 0.49 parts of hydrogen peroxide dissolved in 4.5 parts of deionized water and then 0.21 parts of Bruggolite®FF6 and 0.38 parts of sodium bicarbonate dissolved in 11.48 parts of deionized water are introduced. Upon reaction of the seed monomer, the rest of the monomix-1 is fed parallel with 2.59 parts of hydrogen peroxide dissolved in 40 parts of deionized water, and 1.1 parts of Bruggolite ®FF6 and 2.01 parts of sodium bicarbonate dissolved in 40 parts of deionized water. After 464.58 parts of the monomix-1 have been fed, feeding of 16.02 parts of mono ethylene glycol is started parallel with the monomer mixture. After 3 hours of the reaction which was carried out at 72-75°C, feeds are completed and the resulting polymer dispersion is heated for 30 minutes at 80°C. The reaction temperature is decreased to 70°C and 0.21 parts of tert.-butyl hydroperoxide dissolved in 10 parts of deionized water is added to the flask. After that, 0.10 parts of Bruggolite ®FF6 is added dissolved in 10 parts of deionized water. 139 parts of polyvinyl alcohol 3/88 (18% solution in DI water) are introduced. The final latex polymer has a solid content of 48.3%, pH 5.8, viscosity is 800 cps (LVT 3/20), Tg is 30.5 °C.

### EXAMPLE 1 SD

### Preparation of the spray-dried redispersible powder of Example 1

The latex polymer obtained from **Example 1** is mixed at 50°C. The liquid emulsion is spray dried in a Niro spray dryer system using an inlet temperature of 140°C. The drying gas is air. To prevent caking of the powder, 10% of kaolin and for water resistance sodium oleate are introduced via other nozzles. The obtained powder is free-flowing, blocking resistant and could easily be stirred into water to give a stable dispersion. Other characteristics of the powder are: ash content: 10.00%, bulk density: 0.590 g/cm³. particle size: 0.35% over 400 µm screen, humidity: 1.00%)

### EXAMPLE 2

### Preparation of vinyl acetate/2-ethylhexyl acrylate based emulsion polymer with glycerin

A monomix-2 (monomer blend) consisting of 501.96 parts of vinyl acetate and 16.02 parts of 2-ethylhexyl acrylate was prepared. 40 parts of this monomix was set aside (seed monomix) and the rest was placed in a dosing funnel attached to one of the reactor's necks.

134 parts of deionized water and 191 parts of polyvinyl alcohol 13/88 (14% solution in DI water) are added to a 3-necked flask equipped with a stirrer, thermometer and a reflux condenser. The flask is heated to 65°C and the seed monomix is added. 0.49 parts of hydrogen peroxide dissolved in 4.5 parts of deionized water and then 0.21 parts of Bruggolite®FF6 and 0.38 parts of sodium bicarbonate dissolved in 11.48 parts of deionized water are introduced. Upon reaction of the seed monomix, the rest of the monomix-2 is fed parallel with 2.59 parts of hydrogen peroxide dissolved in 40 parts of deionized water, and 1.1 parts of Bruggolite ®FF6 and 2.01 parts of sodium bicarbonate dissolved in 40 parts of deionized water. After 464.58 parts of the monomer mixture have been fed, feeding of 16.02 parts of glycerin is started parallel with the monomer mixture. After 3 hours of the reaction at 72-75°C, it is heated for 30 minutes at 80°C. The reaction temperature is decreased to 70°C and 0.21 parts of tert.-butyl hydroperoxide dissolved in 10 parts of deionized water are added to the flask. After that, 0.10 parts of Bruggolite ®FF6 is added dissolved in 10 parts of deionized water. 139 parts of polyvinyl alcohol 3/88 (18% solution in DI water) is introduced. The final latex polymer has a solid content of 48.3%, pH 5.8, viscosity is 800 cps (LVT 3/20), Tg is 28.5 °C.

### EXAMPLE 2 SD

### Preparation of the spray-dried redispersible powder of Example 2

The latex polymer obtained from **Example 2** is mixed at 50°C. The liquid emulsion is spray dried in a Niro spray dryer system using an inlet temperature of 140°C. The drying gas is air. To prevent caking of the powder 10% of kaolin and for water resistance sodium oleate are introduced *via* other nozzles. The obtained powder is free-flowing, blocking resistant and could easily be stirred into water to give a stable dispersion. Other characteristics of the powder are: ash content: 10.56%, bulk density: 0.591 g/cm³. particle size: 0.30% over 400 µm screen, humidity: 1.03%

### COMPARATIVE EXAMPLE 3

### Preparation of vinyl acetate/2-ethylhexyl acrylate based emulsion polymer without di- or tri-hydroxy alcohols

A monomix-3 (monomer blend) consisting of 501.96 parts of vinyl acetate and 16.02 parts of 2-ethylhexyl acrylate was prepared. 40 parts of this monomix was set aside (seed monomix) and the rest was placed in a dosing funnel attached to one of the reactor's necks.

134 parts of deionized water and 191 parts of polyvinyl alcohol 13/88 (14% solution in DI water) are added to a 3-necked flask equipped with a stirrer, thermometer and a reflux condenser. The flask is heated to 65°C and the seed monomix is added. 0.49 parts of hydrogen peroxide dissolved in 4.5 parts of deionized water and then 0.21 parts of Bruggolite ®FF6 and 0.38 parts of sodium bicarbonate dissolved in 11.48 parts of deionized water are introduced. Upon reaction of the seed monomix, the rest of the monomix-3 is fed parallel with 2.59 parts of hydrogen peroxide dissolved in 40 parts of deionized water, and 1.1 parts of Bruggolite ®FF6 and 2.01 parts of sodium bicarbonate dissolved in 40 parts of deionized water. After 3 hours of reaction at 72-75°C, it is heated for 30 minutes more at 80°C. The reaction temperature is decreased to 70°C and 0.21 parts of tert.-butyl hydroperoxide dissolved in 10 parts of deionized water is added to the flask. After that, 0.10 parts of Bruggolite ®FF6 is added dissolved in 10 parts of deionized water. 139 parts of polyvinyl alcohol 3/88 (18% solution in DI water) is introduced. The final latex polymer has a solid content of 48.0%, pH 5.4, viscosity is 850 cps (LVT 3/20), Tg is 30°C.

### COMPARATIVE EXAMPLE 3 SD

### Preparation of the spray-dried redispersible powder of Example 3

The latex polymer obtained from Comparative Example 3 is mixed at 50°C. The liquid emulsion is spray dried in a Niro spray dryer using an inlet temperature of 140°C. The drying gas is air. To prevent caking of the powder 10% of kaolin and for water resistance sodium oleate are introduced via other nozzles. The obtained powder is free-flowing, blocking resistant and could easily be stirred into water to give a stable dispersion. Other characteristics of the powder are: ash content: 10.20% ,bulk density: 0.592 g/cm³, particle size: 0.39% over 400 µm screen, humidity: 1.03%.

### Application tests of the Examples in ETICS Plasters

The EPS test samples were cured at 23±2 °C and 50±10 % relative humidity conditions. The application tests of these samples were evaluated according to European test standards. For determination of impact resistance, EN 13497 standard was followed. The tensile bonding strength of the samples was evaluated based on EN 13494. The tensile bonding strength and breaking of EPS surface tests were done in a Zwick Universal Testing machine. In addition to these, the determination of water absorption coefficient due to capillary action of the cured mortars was also evaluated according to EN 1015-18 standard (Table 1).

It can be easily observed that the impact resistance of the building materials were remarkably improved in Examples 1 SD and 2 SD when compared to Comparative Example 3 SD where neither di- nor tri-hydroxy alcohol was used. In addition to impact resistance, the tensile bonding strength, breaking up of EPS surface is significantly improved while the use of the water soluble MEG and glycerol did not have any detrimental effect on water absorption of the cured mortar samples.

**Table-1 Application test results of the samples in ETICS applications**

| | | | | **Internal References** | | |
|---|---|---|---|---|---|---|
| **Application Tests** | **Example 1 SD** | **Example 2 SD** | **Comparative Example 3 SD** | **(Ref.A) VAM/2EHA + 0.5% Benzoflex** | **(Ref.B) VAM/2EHA** | **(Ref.C) VAM/ VeoVa** |
| Measured Tg (°C) | 30.5 | 28.5 | 30.0 | 29.5 | 3.0 | 21 |
| Tensile bond strength on EPS after 28 days (min 80 k/Pa) | 85 k/Pa | 83 k/Pa | 68.66 k/Pa | 83 k/Pa | 81 k/Pa | 56.16 k/Pa |
| Breaking of EPS surface after 7 days (min 40%) | 100% | 100% | 0% | 100% | 100% | 0% |
| Breaking of EPS surface after 14 days (min 40%) | 100% | 100% | 0% | 100% | 100% | 0% |
| Breaking of EPS surface after 28 days (min 40%) | 100% | 100% | 0% | 100% | 100% | 0% |
| Impact resistance after 3 days | good (no cracks) | good (no cracks) | poor (cracks observed) | poor (cracks observed) | poor (cracks observed) | poor (cracks observed) |
| Impact resistance after 7 days | good (no cracks) | good (no cracks) | poor (cracks observed) | poor (cracks observed) | poor (cracks observed) | poor (cracks observed) |
| Impact resistance after 14 days | good (no cracks) | good (no cracks) | poor (cracks observed) | poor (cracks observed) | poor (cracks observed) | poor (cracks observed) |
| Impact resistance after 28 days | good (no cracks) | good (no cracks) | poor (cracks observed) | poor (cracks observed) | poor (cracks observed) | poor (cracks observed) |
| water absorption (≤ 0.5 kg/m2; min 0.5) | 0,1 | 0,05 | 0,07 | 0,5 | 0,11 | 0,08 |

In the left column of the table the minimum values are indicated which are the minimum values to be considered acceptable in accordance with the norms cited hereinabove as the standard norms for evaluating each of the properties compared in this table.

The three internal references on the table illustrate the counterintuitive improvement in impact resistance effected by the present invention.

Ref. A is a powder based on a similar composition, comparable Tg and similar bonding strength onto EPS as Examples 1 SD and 2 SD. The impact resistance is remarkably lower than that of Examples 1 SD and 2 SD even though it has been helped by post-addition with plasticizer (Benzoflex) to improve its flexibility.

Ref. B is a powder based on a similar monomer composition but using a much higher ratio of 2EHA in order to dramatically increase flexibility and induce softness, resulting in a much lower Tg (about 25°C lower). Although the powder compound shows good flexibility and bonding strength onto EPS, it could not pass the impact resistance test as Examples 1 SD and 2 SD do.

Ref. C is a typical VAM/VeoVa composition of Tg around 20°C. Despite the fact that its Tg is lower than that of Examples 1 SD and 2 SD, it did not pass the impact resistance test and showed a much poorer adhesion performance onto EPS.

Taking the above results into account, it is an extra advantage to be able to obtain good impact resistance with relatively high Tg. Particularly in ETICS application (exterior) soft polymers or plasticized ones tend to show a reduced mineral pigments and fillers binding power along with a remarkable tendency to pick up dirt.

## Claims

1. A process for producing a vinyl ester latex polymer composition,
providing a vinyl ester latex polymer composition, comprising, based on the total amount of monomers,
a) from 50 to 99% by weight of vinyl esters of C2-C12-carboxylic acids and from 1% to 50% of acrylic esters, methacrylic esters, maleic esters, ethylene or any other monomer capable of copolymerizing with the said vinyl esters by radical emulsion polymerization, and
b) from 0.5% to 10% by weight, based on total amount of monomers, of di- and/or tri-hydroxy alcohols of MW (molecular weight) lower than 500 g/mol, and
carrying out emulsion polymerization of this composition in a temperature range from 0 to 100° C and initiated by means of water-soluble free-radical initiators used for emulsion polymerization.

2. The process of claim 1 where the hydroxy component is glycerol.

3. The process of claim 1 where the hydroxy component is a glycol of MW less than 250 g/mol.

4. The process of anyone of claims 1 to 3, wherein the vinyl esters of C2-C12-carboxylic acids are selected from at least one member of the group consisting of vinyl acetate, vinyl propionate, vinyl butyrate, vinyl laurate and vinyl esters of α-branched monocarboxylic acids, particularly vinyl 2-ethylhexanoate, 1-methylvinyl acetate and vinyl pivalate.

5. The process of claim 4, wherein the vinyl esters of C2-C12-carboxylic acids are selected from vinyl acetate and/or vinyl esters of α-branched monocarboxylic acids.

6. The process of anyone of claims 1 to 5, wherein the acrylic or methacrylic esters are selected from methyl acrylate, methyl methacrylate, ethyl acrylate, ethyl methacrylate, propyl acrylate, propyl methacrylate, n-butyl acrylate, tert.-butyl acrylate, n-butyl methacrylate, tert.-butyl methacrylate and/or 2-ethylhexyl acrylate, preferably butyl acrylate and 2-ethyl hexyl acrylate.

7. The process of anyone of claims 1 to 6, wherein the maleic esters are selected from di-butyl maleate and/or di-octyl maleate.

8. The process of anyone of claims 1 to 7, wherein said latex polymer composition further comprises from 0.01 to 5% by weight, based on the total weight of the polymer, of one or more auxiliary monomer units for crosslinking or to modify the adhesion properties,

9. The process of claim 8, wherein the auxiliary monomer unit for crosslinking is derived from N-methylolacrylamide, N-methylolmethacrylamide; N-(alkoxymethyl)acrylamides or N-(alkoxymethyl)methacrylamides containing a C₁-C₆-alkyl radical, including N-(isobutoxymethyl)acrylamide (IBMA), N-(isobutoxymethyl)methacrylamide (IBMMA), N-(n-butoxymethyl)acrylamide (NBMA), N-(n-butoxymethyl)methacrylamide (NBMMA); multiple ethylenically unsaturated comonomers including ethylene glycol diacrylate, 1,3-butylene glycol diacrylate, 1,4-butylene glycol diacrylate, propylene glycol diacrylate, divinyl adipate, divinyl benzene, vinyl methacrylate, vinyl acrylate, allyl methacrylate, allyl acrylate, diallyl maleate, diallyl phthalate, diallyl fumarate, methylenebisacrylamide, cyclopentadienyl acrylate and triallyl cyanurate.

10. The process of claim 8, wherein the auxiliary monomer unit to modify the adhesion properties is derived from hydroxylalkyl methacrylates and hydroxylalkyl acrylates including hydroxyethyl, hydroxypropyl and hydroxybutyl acrylate or methacrylate, diacetone-acrylamide or acetylacetoxyethyl acrylate or methacrylate.

11. The process of anyone of claims 1 to 10, said composition further comprising one or more protective colloids or emulsifiers or combinations of both in a total amount of from 2 to 40%, more preferably 3 to 15 % and most preferably 5 to 10% by weight based on the total weight of the monomers, preferably comprising one or more protective colloids selected from polyvinyl alcohols, polyethylene glycol, polyvinylpyrrolidone, celluloses including hydroxyethylcellulose, hydroxypropylcellulose and carboxymethylcellulose, starches and dextrins, cyclodextrins, and homopolymers or copolymers of acrylamidopropanesulfonic acid.

12. A vinyl ester latex polymer composition obtainable by the process of anyone of claims 1 to 11.

13. A water redispersible polymer powder obtainable by spray-drying the vinyl ester latex polymer composition of claim 12.

14. Use of the water redispersible polymer powder as defined in claim 13 as an additive for EPS and XPS boards in ETICS applications.

## Patentansprüche

1. Verfahren zur Herstellung einer Vinylesterlatexpolymerzusammensetzung, Bereitstellen einer Vinylesterlatexpolymerzusammensetzung, umfassend, bezogen auf die Gesamtmenge an Monomeren,
a) von 50 bis 99 Gew.-% Vinylester von C2-C12 Carbonsäuren und von 1% bis 50% Acrylester, Methycrylester, Maleinsäureester, Ethylen und jedwedem anderen Monomer, befähigt zum Copolymerisieren mit den Vinylestern durch radikalische Emulsionspolymerisation, und
b) von 0,5 Gew.-% bis 10 Gew.-%, bezogen auf die Gesamtmenge an Monomeren, Di- und/oder Trihydroxyalkohole mit MW (Molekulargewicht) von weniger als 500 g/mol, und
Durchführen von Emulsionspolymerisation dieser Zusammensetzung in einem Temperaturbereich von 0 bis 100°C und initiiert mittels wasserlöslicher radikalischer Initiatoren verwendet zur Emulsionspolymerisation.

2. Verfahren gemäß Anspruch 1, wobei die Hydroxykomponente Glycerin ist.

3. Verfahren gemäß Anspruch 1, wobei die Hydroxykomponente ein Glycol mit MW von weniger als 250 g/mol ist.

4. Verfahren gemäß einem der Ansprüche 1 bis 3, wobei die Vinylester von C2-C12-Carbonsäuren aus mindestens einem Mitglied der Gruppe, bestehend aus Vinylacetat, Vinylpropionat, Vinylbutyrat, Vinyllaurat und Vinylestern von α-verzweigten Monocarbonsäuren, insbesondere Vinyl-2-ethylhexanoat, 1-Methylvinylacetat und Vinylpivalat, ausgewählt sind.

5. Verfahren gemäß Anspruch 4, wobei die Vinylester von C2-C12 Carbonsäuren aus Vinylacetat und/oder Vinylestern von α-verzweigten Monocarbonsäuren ausgewählt sind.

6. Verfahren gemäß einem der Ansprüche 1 bis 5, wobei die Acryl- oder Methacrylsäureester aus Methylacrylat, Methylmethacrylat, Ethylacrylat, Ethylmethacrylat, Propylacrylat, Propylmethacrylat, n-Butylacrylat, tert.-Butylacrylat, n-Butylmethacrylat, tert.-Butylmethacrylat und/oder 2-Ethylhexylacrylat, vorzugsweise Butylacrylat und 2-Ethylhexylacrylat, ausgewählt sind.

7. Verfahren gemäß einem der Ansprüche 1 bis 6, wobei die Maleinsäureester aus Di-butylmaleat und/oder Di-octylmaleat ausgewählt sind.

8. Verfahren gemäß einem der Ansprüche 1 bis 7, wobei die Latexpolymerzusammensetzung weiter von 0,01 bis 5 Gew.-%, bezogen auf das Gesamtgewicht des Polymers, von einem oder mehreren Hilfsmonomereinheiten zum Vernetzen oder zum Modifzieren der Haftungseigenschaften umfaßt.

9. Verfahren gemäß Anspruch 8, wobei die Hilfsmonomereinheit zum Vernetzen von N-Methylolacrylamid, N-Methylolmethacrylamid; N-(Alkoxymethyl)acrylamiden oder N-(Alkoxymethyl)methacrylamiden enthaltend einen C₁-C₆-Alkylrest, einschließlich N-(lsobutoxymethyl)acrylamid (IBMA), N-(Isobutoxymethyl)methacrylamid (IBMMA), N-(n-Butoxymethyl)acrylamid (MBMA), N-(n-Butoxymethyl)methacrylamid (NBMMA); mehrfach ethylenisch ungesättigten Comonomeren einschließlich Ethylenglycoldiacrylat, 1,3-Butylenglycoldiacrylat, 1,4-Butylenglycoldiacrylat, Propylenglycoldiacrylat, Divinyladipat, Divinylbenzol, Vinylmethacrylat, Vinylacrylat, Allylmethacrylat, Allylacrylat, Diallylmaleat, Diallylphthalat, Diallylfumarat, Methylenbisacrylamid, Cyclopentadienylacrylat und Triallylcyanurat abgeleitet ist.

10. Verfahren gemäß Anspruch 8, wobei die Hilfsmonomereinheit zum Modifizieren der Haftungseigenschaften von Hydroxyalkylmethacrylaten und Hydroxyalkylacrylaten einschließlich Hydroxyethyl-, Hydroxypropyl- und Hydroxybutylacrylat oder -methacrylat, Diacetonacrylamid oder Acetylacetoxyethylacrylat oder -methacrylat abgeleitet ist.

11. Verfahren gemäß einem der Ansprüche 1 bis 10, wobei die Zusammensetzung weiter ein oder mehrere Schutzkolloide oder Emulgiermittel oder Kombinationen von beiden in einer Gesamtmenge von 2 bis 40 Gew.-%, mehr bevorzugt 3 bis 15 Gew.-% und am meisten bevorzugt 5 bis 10 Gew.-%, bezogen auf das Gesamtgewicht der Monomere, umfaßt, vorzugsweise umfassend ein oder mehrere Schutzkolloide, ausgewählt aus Polyvinylalkoholen, Polyethylenglycol, Polyvinylpyrrolidon, Cellulosen einschließlich Hydroxyethylcellulose, Hydroxypropylcellulose und Carboxymethylcellulose, Stärken und Dextrinen, Cyclodextrinen und Homopolymeren oder Copolymeren von Acrylamidopropansulfonsäure.

12. Vinylesterlatexpolymerzusammensetzung, erhältlich durch das Verfahren gemäß einem der Ansprüche 1 bis 11.

13. Wasser-redispergierbares Polymerpulver, erhalten durch Sprühtrocknen der Vinylesterlatexpolymerzusammensetzung gemäß Anspruch 12.

14. Verwendung des Wasser-redispergierbaren Polymerpulvers, wie in Anspruch 13 definiert, als ein Additiv für EPS und XPS-Platten in ETICS-Anwendungen.

## Revendications

1. Procédé de préparation d'une composition polymère de latex d'ester vinylique,
mise à disposition d'une composition polymère de latex d'ester vinylique, comprenant sur base de la quantité totale de monomères,
a) de 50 à 99% en poids d'esters vinyliques d'acides carboxyliques en C2-C12 et de 1 à 50% d'esters acryliques, d'esters méthacryliques, d'esters maléiques, d'éthylène et d'autres monomères capables de polymériser avec lesdits esters vinyliques par une polymérisation radicalaire en émulsion, et
b) de 0,5% à 10% en poids, sur base de la quantité totale des monomères, d'alcools di- et trihydroxylés de PM (poids moléculaire) inférieur à 500 g/mole, et
réalisation de la polymérisation en émulsion de cette composition dans une plage de température allant de 0°C à 100°C et initiée au moyen d'initiateurs radicalaires solubles dans l'eau utilisés pour la polymérisation en émulsion.

2. Procédé selon la revendication 1, où le composant hydroxylé est le glycérol.

3. Procédé selon la revendication 1, où le composant hydroxylé est un glycol de PM inférieur à 250 g/mole.

4. Procédé selon l'une quelconque des revendications 1 à 3, où les esters vinyliques d'acides carboxyliques en C2-C12 sont au moins un choisi parmi le groupe consistant en l'acétate de vinyle, le propionate de vinyle, le butyrate de vinyle, le laurate de vinyle et des esters vinyliques d'acides monocarboxyliques α-ramifiés, en particulier le 2-éthylhexanoate de vinyle, l'acétate de 1-méthylvinyle et le pivalate de vinyle.

5. Procédé selon la revendication 4, où les esters vinyliques d'acides carboxyliques en C2-C12 sont choisis parmi l'acétate de vinyle et/ou des esters vinyliques d'acides monocarboxyliques α-ramifiés.

6. Procédé selon l'une quelconque des revendications 1 à 5, où les esters acryliques ou méthacryliques sont choisis parmi l'acrylate de méthyle, le méthacrylate de méthyle l'acrylate d'éthyle, le méthacrylate d'éthyle, l'acrylate de propyle, le méthacrylate de propyle, l'acrylate de n-butyle, l'acrylate de t-butyle, le méthacrylate de n-butyle, le méthacrylate de t-butyle et/ou l'acrylate de 2-éthylhexyle, de préférence l'acrylate de butyle et l'acrylate de 2-éthylhexyle.

7. Procédé selon l'une quelconque des revendications 1 à 6, où les esters maléiques sont choisis parmi le maléate de dibutyle et/ou le maléate de dioctyle.

8. Procédé selon l'une quelconque des revendications 1 à 7, où ladite composition polymère de latex comprend en outre, 0,01 à 5% en poids, sur base du poids total du polymère, d'une ou de plusieurs unités monomères auxiliaires pour la réticulation ou pour modifier les propriétés d'adhésion.

9. Procédé selon la revendication 8, où l'unité monomère auxiliaire pour la réticulation dérivé du N-méthylolacrylamide, du N-méthylolméthacrylamide ; de N-(alcoxyméthyl)acrylamides ou N-(alcoxyméthyl)méthacrylamides contenant un radical alkyle en C₁-C₆, notamment le N-(isobutoxyméthyl)acrylamide (IBMA), le N-(isobutoxyméthyl)méthacrylamide (IBMMA), le N-(n-butoxyméthyl)acrylamide (NBMA), le N-(n-butoxyméthyl)méthacrylamide (NBMMA) ; des comonomères à plusieurs insaturations éthyléniques comprenant le diacrylate d'éthylèneglycol, le diacrylate de 1,3-butylèneglycol, le diacrylate de 1,4-butylèneglycol, le diacrylate de propylèneglycol, l'adipate de divinyle, le divinylbenzène, le méthacrylate de vinyle, l'acrylate de vinyle, le méthacrylate d'allyle, l'acrylate d'allyle, le maléate de diallyle, le phtalate de diallyle, le fumarate de diallyle, le méthylènebisacrylamide, l'acrylate de cyclopentadiényle et le cyanurate de triallyle.

10. Procédé selon la revendication 8, où l'unité monomère auxiliaire pour modifier les propriétés d'adhésion dérivé de méthacrylates d'hydroxyalkyle et d'acrylate d'hydroxyalkyle, comprenant les acrylates ou méthacrylates d'hydroxyéthyle, d'hydroxypropyle et d'hydroxybutyle, le diacétone-acrylamide ou l'acrylate ou le méthacrylate d'acétylacétoxyéthyle.

11. Procédé selon l'une quelconque des revendications 1 à 10, ladite composition comprenant en outre, un ou plusieurs colloïdes protecteurs ou émulsifiants ou des combinaisons de ceux-ci, en une quantité totale allant de 2 à 40%, de préférence de 3 à 15% et de manière la plus préférée de 5 à 10% en poids sur base du poids total des monomères, comprenant de préférence un ou plusieurs des colloïdes protecteurs choisis parmi des poly(alcools vinyliques), du polyéthylèneglycol, de la polyvinylpyrrolidone, des celluloses comprenant une hydroxyéthylcellulose, une hydroxypropylcellulose et une carboxyméthylcellulose, des amidons et des dextrines, des cyclodextrines et des homopolymères ou copolymères d'acide acrylamidopropanesulfonique.

12. Composition polymère de latex d'ester vinylique pouvant être obtenue par le procédé selon l'une quelconque des revendications 1 à 11.

13. Poudre polymère redispersible dans l'eau, pouvant être obtenue par le séchage par pulvérisation de la composition polymère de latex d'ester vinylique selon la revendication 12.

14. Utilisation de la poudre polymère redispersible dans l'eau, telle que définie à la revendication 13 en tant qu'additif pour des planches PSE et PSX dans des applications ETICS.
